(19) Europäisches Patentamt / European Patent Office / Office européen des brevets

(11) **EP 4 663 812 A1**

(12) **EUROPEAN PATENT APPLICATION**
published in accordance with Art. 153(4) EPC

(43) Date of publication:
**17.12.2025 Bulletin 2025/51**

(21) Application number: **25763906.2**

(22) Date of filing: **14.03.2025**

(51) International Patent Classification (IPC):
**C25B 1/01** (2021.01)  **C25B 9/00** (2021.01)
**C01B 32/935** (2017.01)  **C25B 15/00** (2006.01)
**C01B 32/942** (2017.01)  **C25B 15/02** (2021.01)
**C07C 5/00** (2006.01)  **C25B 15/08** (2006.01)
**C07C 11/24** (2006.01)

(52) Cooperative Patent Classification (CPC):
**C01B 32/935; C01B 32/942; C07C 5/00;
C07C 11/24; C25B 1/01; C25B 9/00; C25B 15/00;
C25B 15/02; C25B 15/08**

(86) International application number:
**PCT/JP2025/009786**

(87) International publication number:
**WO 2025/192722 (18.09.2025 Gazette 2025/38)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **15.03.2024 JP 2024041238**

(71) Applicants:
• **Daikin Industries, Ltd.**
**Osaka-shi, Osaka 530-0001 (JP)**
• **The Doshisha**
**Kyoto-shi, Kyoto 602-8580 (JP)**

(72) Inventors:
• **TSUCHII, Takane**
**Osaka-shi, Osaka 530-0001 (JP)**

• **ISOGAI, Tomohiro**
**Osaka-shi, Osaka 530-0001 (JP)**
• **YAMAUCHI, Akiyoshi**
**Osaka-shi, Osaka 530-0001 (JP)**
• **KISHIKAWA, Yosuke**
**Osaka-shi, Osaka 530-0001 (JP)**
• **GOTO, Takuya**
**Kyotanabe-shi, Kyoto 610-0394 (JP)**
• **WATANABE, Takashi**
**Kyotanabe-shi, Kyoto 610-0394 (JP)**
• **SUZUKI, Yuta**
**Kyotanabe-shi, Kyoto 610-0394 (JP)**

(74) Representative: **Hoffmann Eitle
Patent- und Rechtsanwälte PartmbB
Arabellastraße 30
81925 München (DE)**

(54) **METHOD FOR PRODUCING METAL CARBIDE AND HYDROCARBON**

(57) A method for producing a metal carbide using a carbonate ion as a carbon source, the method comprising: preparing a molten salt containing a first metal ion and the carbonate ion; arranging a working electrode and a counter electrode in the molten salt, and supplying a current between the working electrode and the counter electrode at a predetermined current density to produce a carbide of the first metal; and recovering a carbonate ion concentration near the working electrode, wherein the production of the carbide of the first metal and the recovery of the carbonate ion concentration are alternatively repeated one or more times.

**(Cont. next page)**

[FIG. 1]

```
                    ┌─────────────┐
                    │    START    │
                    └──────┬──────┘
                           │
                           ▼
           ┌──────────────────────────────┐
           │  PREPARATION OF MOLTEN SALT   │ ─── S11
           │  CONTAINING FIRST METAL AND   │
           │         CARBONATE ION         │
           └──────────────┬───────────────┘
                          │
                          ▼
           ┌──────────────────────────────┐
           │  CURRENT SUPPLY (PRODUCTION   │ ─── S12
           │     OF FIRST METAL CARBIDE)   │
           └──────────────┬───────────────┘
                          │
                          ▼
           ┌──────────────────────────────┐
           │ INTERRUPTION OF CURRENT SUPPLY│ ─── S13
           │  (RECOVERY OF CARBONATE ION   │
           │        CONCENTRATION)         │
           └──────────────┬───────────────┘
                          │
                          ▼
           ┌──────────────────────────────┐
           │  CURRENT SUPPLY (PRODUCTION   │ ─── S12
           │     OF FIRST METAL CARBIDE    │
           └──────────────┬───────────────┘
                          │
                          ▼
                    ┌─────────────┐
                    │     END     │
                    └─────────────┘
```

**Description**

TECHNICAL FIELD

The present invention relates to methods for producing a metal carbide and a hydrocarbon.

BACKGROUND ART

Acetylene is an industrially important substance as a raw material for various organic compounds. Acetylene is usually obtained by the reaction of a metal carbide (mainly, calcium carbide) with water.

Patent Documents 1 and 2 disclose methods in which the reaction rapidly proceeds at a relatively low temperature and which is capable of efficiently obtaining a metal carbide. Non Patent Document 1 indicates that pulse electrolysis is useful for obtaining a dense and uniform carbon film by the electrolytic reduction of carbonate ions in a molten LiCl bath.

PRIOR ART DOCUMENTS

PATENT DOCUMENTS

Patent Document 1: JP 2023-054787 A
Patent Document 2: JP 2023-054788 A

NON PATENT DOCUMENT

Non Patent Document 1: Chongrui Zhuang et al. "Deposition and Morphology Control of Carbon Film through Electrochemical Reduction of Carbonate Ions in Molten LiCl", October 2023, Journal of The Electrochemical Society 170(10)

SUMMARY OF INVENTION

PROBLEMS TO BE SOLVED BY THE INVENTION

An object of the present disclosure is to provide a method capable of further improving the current efficiency upon production of a metal carbide. The present disclosure further provides a method for producing a hydrocarbon from the obtained metal carbide.

SOLUTIONS TO THE PROBLEMS

The present disclosure includes the following aspects.

[1] A method for producing a metal carbide using a carbonate ion as a carbon source, the method comprising:

preparing a molten salt containing a first metal ion and the carbonate ion;
arranging a working electrode and a counter electrode in the molten salt, and supplying a current between the working electrode and the counter electrode at a predetermined current density to produce a carbide of the first metal; and
recovering a carbonate ion concentration near the working electrode, wherein
the production of the carbide of the first metal and the recovery of the carbonate ion concentration are alternatively repeated one or more times.

[2] The method for producing a metal carbide according to the above [1], wherein the recovery of the carbonate ion concentration is conducted by interrupting the current supply between the working electrode and the counter electrode.
[3] The method for producing a metal carbide according to the above [2], wherein the current supply is interrupted for 1 second or more and 1,000 seconds or less in the recovery of the carbonate ion concentration.
[4] The method for producing a metal carbide according to the above [2] or [3], wherein the current is supplied for 10 seconds or more and 1,000 seconds or less in the production of the carbide of the first metal.

[5] The method for producing a metal carbide according to the above [1], wherein the recovery of the carbonate ion concentration is conducted by supplying a current between the working electrode and the counter electrode at a current density lower than the current density supplied during the production of the carbide of the first metal.

[6] The method for producing a metal carbide according to any one of the above [1] to [5], wherein the molten salt contains at least one selected from the group consisting of an alkali metal ion and an alkali earth metal ion as the first metal ion.

[7] The method for producing a metal carbide according to any one of the above [1] to [6], wherein the molten salt contains one selected from the group consisting of a lithium ion, a sodium ion, a potassium ion, a rubidium ion, and a cesium ion, and one selected from the group consisting of a calcium ion and a magnesium ion, as the first metal ion.

[8] The method for producing a metal carbide according to any one of the above [1] to [7], wherein the molten salt further contains at least one selected from the group consisting of a halide ion and an oxide ion, as an anion.

[9] The method for producing a metal carbide according to any one of the above [1] to [8], wherein the molten salt further contains both a halide ion and an oxide ion, as the anion.

[10] The method for producing a metal carbide according to any one of the above [1] to [9], wherein the metal carbide composition further contains at least one selected from the group consisting of carbon, and a simple substance, a halide, a carbonate, an oxide, a hydride, and a peroxide of the first metal.

[11] A method for producing a hydrocarbon comprising:

preparing a molten salt containing a first metal ion and a carbonate ion;

arranging a working electrode and a counter electrode in the molten salt, and supplying a current between the working electrode and the counter electrode at a predetermined current density to produce a carbide of a first metal;

recovering a carbonate ion concentration near the working electrode; and

hydrolyzing the carbide of the first metal to obtain gas containing a hydrocarbon, wherein

the production of the carbide of the first metal and the recovery of the carbonate ion concentration are alternatively repeated one or more times.

[12] The method for producing a hydrocarbon according to the above [11], wherein the gas contains acetylene.

[13] The method for producing a hydrocarbon according to the above [11] or [12], wherein the gas contains acetylene and at least one selected from the group consisting of ethylene, ethane, methane, methylacetylene, propylene, butene, and hydrogen.

EFFECTS OF THE INVENTION

The present disclosure can provide a method for producing a metal carbide with excellent current efficiency and a method for producing a hydrocarbon from the obtained metal carbide.

BRIEF DESCRIPTION OF THE DRAWINGS

FIG. 1 is a flow chart of the method for producing a metal carbide according to the first embodiment.

FIG. 2 is a flow chart of the method for producing a hydrocarbon according to the first embodiment.

FIG. 3 is a flow chart of the method for producing a metal carbide according to the second embodiment.

FIG. 4 is a flow chart of the method for producing a hydrocarbon according to the second embodiment.

FIG. 5 is a graph showing the results of the analysis by X-Ray diffraction of the precipitate obtained in Example 1.

FIG. 6 is a graph showing a change over time of the working electrode potential upon energization in the production of the metal carbide in Example 1.

DESCRIPTION OF EMBODIMENTS

When the electrolysis of a molten salt containing a first metal ion and a carbonate ion is carried out for a long period of time, the current efficiency may be reduced. The reduction in the current efficiency is considered to be caused due to an excessively low concentration of the carbonate ion that is a carbon source of a metal carbide near the working electrode.

During the current supply between a working electrode and a counter electrode, a reduction reaction of a carbonate ion ($CO_3^{2-}$) is caused near the working electrode, $CO_3^{2-}$ is consumed, and the $CO_3^{2-}$ concentration near the

working electrode is gradually reduced. Then, a $CO_3^{2-}$ concentration gradient is caused between near the working electrode and an area distant from the working electrode in an electrolytic bath, that is, in a so-called diffusion layer. To relieve the concentration gradient, diffusion of $CO_3^{2-}$ is caused from an area distant from the working electrode in the electrolytic bath to near the working electrode. However, when the current density is high, diffusion of $CO_3^{2-}$ in the diffusion layer cannot overtake the consumption of $CO_3^{2-}$ at the working electrode, and the $CO_3^{2-}$ concentration near the working electrode is excessively reduced. As a result, it is considered that the reduction reaction of $CO_3^{2-}$ hardly proceeds (further, the reduction reaction is interrupted), so that the current efficiency is reduced.

In the present disclosure, the current efficiency is improved by recovering the carbonate ion concentration near the working electrode during electrolysis. The improvement of the current efficiency improves productivity.

The term near the working electrode refers to a space in which the reduction reaction of $CO_3^{2-}$ may occur. The term near the working electrode can be said as, for example, a space between a surface of the working electrode and a point 1 nm apart from the surface in a so-called Helmholz layer.

The recovery of the carbonate ion concentration means that the carbonate ion concentration is higher than the carbonate ion concentration near the working electrode immediately after interruption of the current supply, that is, relieving of the concentration gradient in the diffusion layer. The recovery of the carbonate ion concentration near the working electrode can be conducted by interrupting or suppressing the reduction reaction of $CO_3^{2-}$.

First embodiment

In the present embodiment, when constant current electrolysis is carried out, the recovery of the carbonate ion concentration is conducted by interrupting the current supply between the working electrode and the counter electrode.

By interrupting the current supply between the working electrode and the counter electrode, the reduction reaction of the carbonate ion ($CO_3^{2-}$) is interrupted and the consumption of $CO_3^{2-}$ near the working electrode is interrupted. During that time, $CO_3^{2-}$ is diffused and the $CO_3^{2-}$ concentration near the working electrode is recovered.

[Method for producing metal carbide]

The method for producing a metal carbide according to the present embodiment comprises preparing a molten salt containing a first metal ion and a carbonate ion, arranging a working electrode and a counter electrode in the molten salt, supplying a current between the working electrode and the counter electrode at a predetermined current density to produce a carbide of a first metal, and interrupting a current supply between the working electrode and the counter electrode. The current supply and the current supply interruption are alternately repeated one or more times.

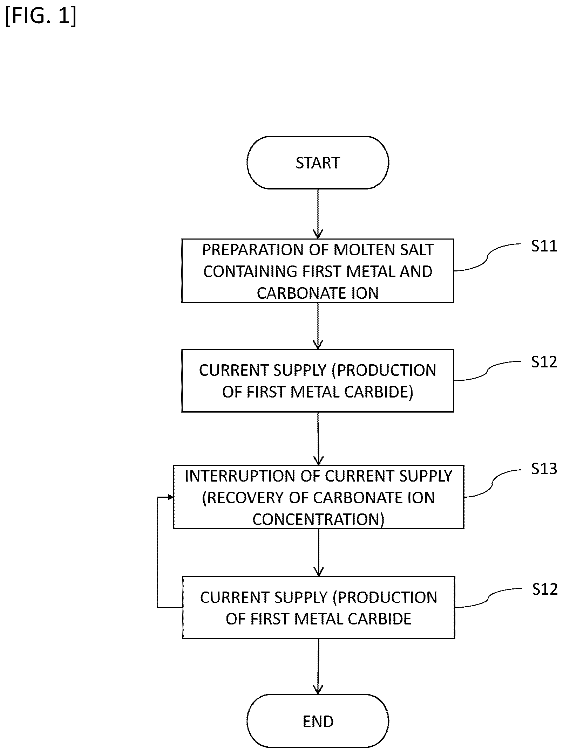

FIG. 1 is a flow chart of the method for producing a metal carbide according to the present embodiment.

In the present embodiment, a carbonate ion derived from carbon dioxide is used. By effectively utilizing $CO_2$, which is said as a cause of global warming, as a carbon source, a carbide composition containing a carbide of the first metal can be obtained.

In the present embodiment, the current supply and the current supply interruption are alternately repeated, and this is different from the supply of a so-called pulse current. In the pulse current, the width of a pulse (current supply time) is generally less than 1 second, the pulse interval (cycle) is less than 1 second, the repetition frequency is 10 Hz or more, and the duty ratio is 2 to 8. In the electrolysis of the molten salt containing $CO_3^{2-}$ described in Non Patent Document 1, the width of a pulse is 25 milliseconds, the current supply time is 475 milliseconds, the pulse interval (cycle) is 500 milliseconds, the repetition frequency is 2 Hz, and the duty ratio is 0.05.

In the present embodiment, the current is not supplied so that on/off is instantaneously switched, as in the pulse current. With respect to the current in the present embodiment, the duty ratio is 0.5 or more and less than 1, and the repetition frequency is 1 mHz or more and 4 mHz or less. In the present embodiment, the current supply time is, for example, 10 seconds or more, and the current supply interruption time is 1 second or more.

(i) Preparation of molten salt (S11)

The molten salt containing a carbonate ion derived from the first metal ion and carbon dioxide is prepared. The carbonate ion is produced by adding gas containing carbon dioxide to an electrolytic bath. The first metal ion is produced by the electrolysis of the salt of the first metal.

In the molten salt, it is not required that the whole first metal salt and carbon dioxide are ionized. In the present embodiment, for convenience, the salt of the first metal contained in the electrolytic bath is referred to as the first metal salt, also in the case where the salt is completely ionized, and the molten salt prepared from the first metal salt and carbon dioxide is referred to as the molten salt, also in the case where the molten salt is not completely ionized.

(Carbonate ion derived from carbon dioxide)

The carbonate ion is produced by adding gas containing carbon dioxide to the electrolytic bath.

Gas containing carbon dioxide (hereinafter, sometimes referred to as $CO_2$ gas) in a gas state is brought into contact with the first metal salt in a liquid state. $CO_2$ gas may be brown into the gas phase part of the electrolytic bath and brought into contact with the liquid surface of the first metal salt, or $CO_2$ gas may be brown into the first metal salt. $CO_2$ gas may be a mixed gas of $CO_2$ and an inert gas (typically, argon). A sufficient amount of $CO_2$ gas may be added to the first metal salt before application of a voltage, or $CO_2$ gas may be added to the first metal salt while applying a voltage.

The amount of $CO_2$ gas blown may be appropriately set depending on the amount of the first metal ion. For example, considering the absorption efficiency of $CO_2$ into the first metal salt, the amount of $CO_2$ gas blown is equivalent to or more than the first metal salt.

From the viewpoint of promoting the dissolution of $CO_2$ into the first metal salt, the diameter of bubbles of the $CO_2$ gas blown is desirably smaller. The diameter of bubbles of the $CO_2$ gas may be 10 mm or less, or may be 1 mm or less. The diameter of bubbles of the $CO_2$ gas may be 100 nm or more, or may be 1 $\mu$m or more. The diameter of bubbles of the $CO_2$ gas is micronized by, for example, bubbling through porous materials made of quartz glass or high purity alumina, stirring with a stirrer, applying vibration, or being irradiated with ultrasonic waves.

$CO_2$ gas is preferably preheated to the temperature of the first metal salt, in advance. Preheating suppresses the reduction in the temperature and solidification of the first metal salt.

(Further anion)

The molten salt may contain an anion other than carbonate ion. A further anion is, for example, at least one selected from the group consisting of a halide ion, a sulfate ion, a phosphate ion, a nitrate ion, an acetate ion, a carboxylate ion, and an oxide ion ($O^{2-}$).

At least one of a halide ion and an oxide ion may be contained as the further anion. A metal salt containing a halide ion is generally used as the molten salt, and is excellent as an electrolyte. The oxide ion allows $CO_2$ to be easily ionized.

Both the halide ion and the oxide ion may be contained as the further anion.

(First metal ion)

The first metal ion is, for example, at least one selected from the group consisting of alkali metal ions and alkali earth metal ions. Alkali metal ions and alkali earth metal ions have excellent functions as the electrolyte.

The alkali metal is at least one selected from the group consisting of lithium (Li), sodium (Na), potassium (K), rubidium (Rb), cesium (Cs), and francium (Fr). The alkali metal may be at least one selected from the group consisting of Li, Na, K, Rb, and Cs. In particular, the alkali metal may be at least one selected from the group consisting of Li, Na, K, and Cs.

The alkali earth metal is at least one selected from the group consisting of beryllium (Be), magnesium (Mg), calcium (Ca), strontium (Sr), barium (Ba), and radium (Ra). The alkali earth metal may be at least one selected from the group consisting of Mg, Ca, Sr, and Ba.

In terms of industrial value, the first metal ion may contain an alkali earth metal ion. The first metal ion may contain both an alkali earth metal ion and an alkali metal ion. The alkali metal ion allows the alkaline earth metal salt to be easily ionized and promotes the production of the alkali earth metal ion, reduces the melting point of the molten salt, and enables electrolysis to be performed at a further low temperature.

The first metal ion may contain at least one selected from the group consisting of Li, Na, K, Rb, and Cs ions as the alkali metal ion, and at least one selected from the group consisting of Be, Mg, Ca, Sr, and Ba ions as the alkali earth metal ion. The first metal ion may contain at least one selected from the group consisting of Li, Na, K, Rb, and Cs ions, and at least one selected from the group consisting of Ca and Mg ions.

Examples of the further first metal ion include at least one selected from the group consisting of aluminum (Al), gallium (Ga), indium (In), thallium (Tl), zinc (Zn), cadmium (Cd), gold (Au), silver (Ag), and copper (Cu). Examples of the rare-earth element include scandium (Sc), yttrium (Y), lanthanoid elements, and actinoid elements.

The amount of the first metal ion contained in the molten salt is not limited.

The first metal salt is preferably ionized at a temperature of 800°C or less. Specific examples of the first metal salt include alkali metal halides such as LiF, NaF, KF, RbF, CsF, LiCl, NaCl, KCl, RbCl, CsCl, LiBr, NaBr, KBr, RbBr, CsBr, LiI, NaI, KI, RbI, and CsI; alkaline earth metal halides such as $MgF_2$, $CaF_2$, $SrF_2$, $BaF_2$, $MgCl_2$, $CaCl_2$, $SrCl_2$, $BaCl_2$, $MgBr_2$, $CaBr_2$, $SrBr_2$, $BaBr_2$, $MgI_2$, $CaI_2$, $SrI_2$, and $BaI_2$; metal oxides such as $Li_2O$ and $CaO$; metal carbonates such as $Li_2CO_3$, $Na_2CO_3$, and $K_2CO_3$; metal nitrates such as $LiNO_3$, $NaNO_3$, and $KNO_3$; rare earth element halides such as $ScCl_3$, $YCl_3$, $LaCl_3$, $CeCl_3$, $PrCl_3$, $NdCl_3$, $PmCl_3$, $SmCl_3$, $EuCl_3$, $GdCl_3$, $TbCl_3$, $DyCl_3$, $HoCl_3$, $ErCl_3$, $TmCl_3$, $YbCl_3$, and $LuCl_3$; and earth metal halides such as $AlCl_3$, $GaCl_3$, $InCl_3$, and $TlCl_3$. One of these may be used singly, or two or more may be used in combination. Among them, two or more metal salts may be combined in terms that the melting temperature is easily reduced.

(II) Current supply (S12)

The working electrode and the counter electrode are arranged in the molten salt, and a current is supplied between the working electrode and the counter electrode at a predetermined current density. Consequently, $CO_3^{2-}$ is reduced to give a precipitate containing a carbide of the first metal (first metal carbide). The precipitate containing the first metal carbide is precipitated on the surface of an electrode having a low potential (herein, the working electrode). Carbon and oxygen may be produced as byproducts on the working electrode.

When the first metal is Ca, calcium carbide ($CaC_2$) may be precipitated on the working electrode (Equations 1 and 2). Metal calcium may be further produced on the working electrode (Equation 3). A part or the whole metal calcium produced by this side reaction may be further reacted to be calcium carbide (Equation 4). Alternatively, metal calcium may be reacted with carbon dioxide physically dissolved in the molten salt to be calcium carbide (Equation 5). Fine carbon powder may be produced, so that the molten salt may be turbid in black, in some cases (Equation 6). CaO produced in the above (Equation 5) and (Equation 6) is immediately dissolved in the molten salt and produces calcium ions and oxide ions (Equation 7).

(Equation 1)　　　　　$CO_3^{2-} + 4e^- \rightarrow C + 3O^{2-}$

(Equation 2)　　　　　$Ca^{2+} + 2C + 2e^- \rightarrow CaC_2$

(Equation 3)　　　　　$Ca^{2+} + 2e^- \rightarrow Ca$

(Equation 4)　　　　　$Ca + 2C \rightarrow CaC_2$

(Equation 5)　　　　　$2CO_2 + 5Ca \rightarrow CaC_2 + 4CaO$

(Equation 6)　　　　　$2Ca + CO_2 \rightarrow C + 2CaO$

(Equation 7)　　　　　$CaO \rightarrow Ca^{2+} + O^{2-}$

When the first metal is Na, K, or Li, sodium carbide ($Na_2C_2$), potassium carbide ($K_2C_2$), or lithium carbide ($LiC_2$) is precipitated together with carbon by the same reaction. The same applies to other first metals.

$O^{2-}$ is oxidized on the counter electrode to produce oxygen (Equation 8). The oxygen produced on the counter electrode is discharged into the gas phase. This oxygen gas can be recovered and utilized in other applications.

(Equation 8)　　　　　$2O^{2-} \rightarrow O_2 + 4e^-$

The current supply is carried out at a temperature at which the molten state of the molten salt can be maintained, that is, a temperature about 10°C or higher than the melting point of the molten salt. The temperature of the electrolytic bath may be, for example, 510°C or more, or 550°C or more, in the case of a NaCl-KCl eutectic salt (melting point: 503.8°C). The temperature of the electrolytic bath may be, for example, 800°C or less, or 700°C or less. According to the present disclosure, the reaction proceeds at such a relatively low temperature, so that the energy efficiency is high.

The current value can be appropriately set so that the working electrode potential during electrolysis falls between a potential (Ec) at which carbon is precipitated and a potential (Em) at which the first metal is precipitated. Accordingly, the selectivity of the first metal carbide may be further improved. When the potential of the cathode is excessively high, carbon is mainly precipitated, and the amount of the target first metal carbide produced is easily reduced. When the potential of the working electrode is excessively low, a metal having the highest oxidation reduction potential in the molten salt is mainly precipitated among metals contained in the molten salt, while the first metal carbide is produced. When a plurality of metals each having a similar oxidation reduction potential in the molten salt is present in the molten salt, an alloy of a plurality of metals may be precipitated. For example, when the molten salt contains LiCl, KCl, and $Li_2O$ (5 mol%), the working electrode potential may be 0.0 V or more and 1.0 V or less (based on $Li^+/Li$).

The current may be a direct current or an intermittent current (pulse current), or superposed with an alternating current. The potentials Ec and Em can be determined, for example, using a Fe electrode in the molten salt to be used by carrying out cyclic voltammetry measurement in the molten salt. The working electrode potential is a value obtained by measuring the potential between the reference electrode ($Ag^+/Ag$) and the working electrode, and calibrating the measured value based on the metal precipitation potential. The metal precipitation potential is the precipitation potential of a Na-Ca alloy, in the case of the NaCl-KCl eutectic salt.

The current supply time is not limited. From the viewpoint of the current efficiency, the current supply time may be 10 seconds or more and 1,000 seconds or less. The current supply time may be 250 seconds or more, and 500 seconds or more. The current supply time may be 1,000 seconds or less, and 500 seconds or less.

The material of the working electrode is not limited. Examples of the material of the working electrode include metals such as Ag, Cu, Ni, Pb, Hg, Tl, Bi, In, Sn, Cd, Au, Zn, Ga, Ge, Fe, Pt, Pd, Ru, Ti, Cr, Mo, W, V, Nb, Ta, Zr, and alloys thereof, and carbon materials such as glassy carbon, natural graphite, isotropic graphite, thermal pyrolytic graphite, plastic formed carbon, and conductive diamond.

The material of the counter electrode is not limited. Examples of the material of the counter electrode include Pt, a conductive metal oxide, glassy carbon, natural graphite, isotropic carbon, pyrolytic graphite, plastic formed carbon, and conductive diamond. Examples of the electrode made of a conductive metal oxide include a transparent conductive electrode referred to as ITO electrode in which a film of a mixed oxide of indium and tin is formed on glass, an electrode referred to as DSA electrode (trademark of De Nora Permelec Ltd.) in which a film of an oxide of a platinum metal such as ruthenium or iridium is formed on a substrate such as titanium, and $La_{1-x}Sr_xCoO_{3-\delta}$ and $La_{1-x}Sr_xFeO_{3-\delta}$-based oxide electrodes. Among them, the electrode may be an oxide-based electrode, from the viewpoint that wear due to the oxidation reaction hardly occurs.

(III) Interruption of current supply (S13)

By interrupting the current supply between the working electrode and the counter electrode, the reduction reaction of $CO_3^{2-}$ is interrupted and the consumption of $CO_3^{2-}$ near the working electrode is interrupted. During that time, $CO_3^{2-}$ is diffused and the $CO_3^{2-}$ concentration near the working electrode is recovered. The recovery of the $CO_3^{2-}$ concentration promotes the reduction reaction of $CO_3^{2-}$ by the next current supply.

The current supply interruption time is not limited. From the viewpoint of the current efficiency, the current supply interruption time may be 1 second or more and 1,000 seconds or less. The current supply interruption time may be 1 second or more, and 30 seconds or more. The current supply interruption time may be 300 seconds or less, and 50 seconds or less.

(IV) Current supply and interruption

The current supply and interruption are alternately repeated one or more times. The term alternately repeated one or more times means that, when interruption and supply after the first current supply are defined as one cycle, this cycle is carried out one or more times.

The current supply and current supply interruption may be alternately repeated two or more times (supply → interruption → supply → interruption → supply), three or more times (supply → interruption → supply → interruption → supply → interruption → supply), or four or more times (supply → interruption → supply → interruption → supply → interruption → supply → interruption → supply).

The current supply interruption is carried out between the current supply and the current supply. The current supply interruption time is a time between the current supply and the current supply.

The density of the current supplied at the first time and the density of the current supplied at the second time or later may be the same or different. The densities of the currents supplied at the second time and later may be the same or different from one another.

The supply time of the first current and the supply time of the second current or later may be the same or different. The supply times of the second current and later may be the same or different from one another.

A plurality of current supply interruption times may be the same or different from one another.

In one aspect of the first embodiment, the method for producing a metal carbide is a method for producing a metal carbide using a carbonate ion as a carbon source, the method comprising:

preparing a molten salt containing one selected from the group consisting of a lithium ion, a sodium ion, a potassium ion, a rubidium ion, and a cesium ion, and one selected from the group consisting of a calcium ion and a magnesium ion, as first metal ions, and a carbonate ion;
arranging a working electrode and a counter electrode in the molten salt, and supplying a current between the working electrode and the counter electrode at a current density of 200 mA/cm$^{-2}$ for 300 to 500 seconds to produce a carbide of a first metal; and
interrupting the current supply between the working electrode and the counter electrode for 1 to 300 seconds, wherein the current supply and the current supply interruption are alternately repeated two times under the same conditions.

In another aspect of the first embodiment, the method for producing a metal carbide is a method for producing a metal carbide using a carbonate ion as a carbon source, the method comprising:

preparing a molten salt containing one selected from the group consisting of a lithium ion, a sodium ion, a potassium ion, a rubidium ion, and a cesium ion and one selected from the group consisting of a calcium ion and a magnesium ion, as first metal ions, and a carbonate ion;

arranging a working electrode and a counter electrode in the molten salt, supplying a current between the working electrode and the counter electrode at a current density of 200 mA/cm$^{-2}$ for 250 seconds to produce a carbide of a first metal; and

interrupting the current supply between the working electrode and the counter electrode for 30 seconds, wherein the current supply and the current supply interruption are alternately repeated four times under the same conditions.

(Metal carbide)

The metal carbide to be obtained is mainly a carbide of the first metal (first metal carbide). Considering the hydrolyzability and the like in the subsequent process, the first metal carbide may be at least one selected from the group consisting of $Li_2C_2$, $Na_2C_2$, $K_2C_2$, and $CaC_2$.

According to the present disclosure, the first metal carbide can be obtained with a high selectivity. The selectivity of the first metal carbide is represented by the mass of the first metal carbide with respect to the total mass of the simple substance of the first metal, the compound containing the first metal (including the first metal carbide), and carbon contained in the precipitate on the working electrode. The selectivity of the first metal carbide is 60% by mass or more, and may be 80% by mass or more. The selectivity of the first metal carbide may be 99% by mass or less, and 90% by mass or less. In one aspect, the selectivity of the first metal carbide is 90% by mass or more and 99.9% by mass or less.

Examples of the compound containing the first metal other than the first metal carbide include a salt of the first metal and another anion (e.g., a halide of the first metal), a carbonate of the first metal, an oxide of the first metal, a hydride of the first metal, and a peroxide of the first metal.

(Impurities)

Impurities may be contained in the precipitate. Impurities refer to the precipitate other than the first metal carbide. Examples of impurities contained in the precipitate on the working electrode include at least one selected from the group consisting of carbon, a solidified electrolyte (another metal salt), a compound containing a metal material constituting an apparatus such as an electrode material, a trace component contained in an oxide of the molten salt or the first metal, a simple substance of the first metal, a compound containing the first metal other than the above first metal carbide, and a compound containing the first metal.

The above carbon may include at least one selected from the group consisting of nanocarbon materials such as graphite, amorphous carbon, glassy carbon, carbon nanotubes, diamond, nanodiamond, and graphene.

Examples of the compound containing the first metal include at least one selected from the group consisting of a simple substance, a halide, a carbonate, an oxide, and a carbide of the first metal.

Examples of the compound containing a metal material constituting an apparatus include at least one selected from the group consisting of a halide, an oxide, a carbonate, a metal, and a hydrate of the metal.

For example, when the first metal is Na, a mixture of NaF and NaCl is used as another metal salt, and the material constituting the apparatus contains nickel, at least one selected from the group consisting of Na, NaCl, $Na_2CO_3$, Ni, and $NiCl_2$ may be contained in the precipitate as an impurity.

The amount of impurities is, for example, 40% by mass or less, 20% by mass or less, and 10% by mass or less of the total precipitate on the working electrode. The amount of impurities may be 10% by mass or more, 1% by mass or more, and 0.1% by mass or more of the total precipitate. In one aspect, the amount of impurities is 0.1% by mass or more and 10% by mass or less of the total precipitate.

The presence confirmation and the quantitative determination of the first metal carbide, the simple substance of the first metal, the compound containing the first metal, and other impurities can be carried out by, for example, Raman spectroscopy and X-Ray diffraction (XRD) analysis of the precipitate.

[Method for producing hydrocarbon]

The present embodiment includes hydrolyzing the metal carbide obtained by the above method to obtain a hydrocarbon. According to this method, a hydrocarbon with high purity can be efficiently obtained.

The method for producing a hydrocarbon according to the present disclosure comprises preparing a molten salt containing a first metal ion and a carbonate ion, arranging a working electrode and a counter electrode in the molten salt, supplying a current between the working electrode and the counter electrode at a predetermined current density to produce a carbide of a first metal, recovering a carbonate ion concentration near the working electrode, and hydrolyzing the carbide of the first metal to obtain gas containing a hydrocarbon. The production of the carbide of the first metal and the recovery of the concentration of the carbonate ion are alternatively repeated one or more times.

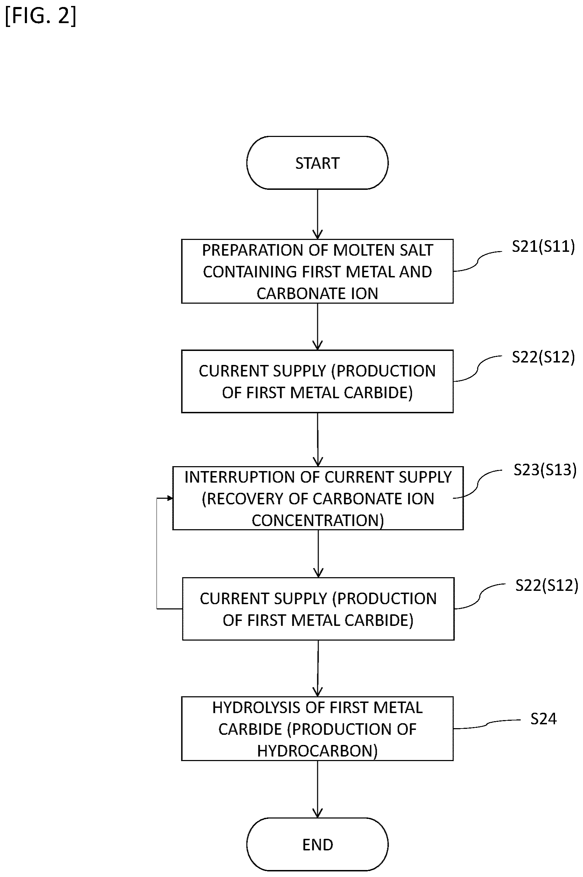

FIG. 2 is a flow chart of the method for producing a hydrocarbon according to the present embodiment.

(1) Preparation of molten salt (S21)

A molten salt is prepared in the same manner as in preparation of molten salt (I) in the above method for producing a metal carbide.

(2) Current supply (S22)

A current is supplied between the working electrode and the counter electrode in the same manner as in (II) current supply in the above method for producing a metal carbide. Consequently, the precipitate containing the first metal carbide is obtained.

(3) Interruption of current supply (S23)

The current supply between the working electrode and the counter electrode is interrupted in the same manner as in (III) interruption of current supply in the above method for producing a metal carbide. Consequently, the $CO_3^{2-}$ concentration near the working electrode is recovered.

(4) Current supply and interruption

The current supply and the current supply interruption are alternately repeated one or more times in the same manner as in (IV) current supply and interruption in the above method for producing a metal carbide.

(5) Hydrolysis of metal carbide (S24)

The first metal carbide is brought into contact with water and hydrolyzed. Consequently, gas containing the target hydrocarbon is obtained. Usually, a hydrocarbon has a low solubility in water. Thus, the produced hydrocarbon is rapidly discharged into the gas phase and recovered.

The first metal carbide may be isolated from the precipitate and hydrolyzed. Isolation is conducted by, for example, a method in which the precipitate is pulverized and a difference in specific gravity is utilized. Alternatively, the precipitate may be hydrolyzed as it is. In this case, the first metal carbide that may be contained in the precipitate is also hydrolyzed to produce a hydrocarbon.

Examples of the hydrocarbon to be obtained include methane ($CH_4$), ethane, ethylene, acetylene ($C_2H_2$), propane, propylene, butane, and butene. In the case where the isolated first metal carbide is used or the amount of impurities (in particular, a simple substance of metal) contained in the precipitate is small, acetylene is obtained as the main component. The main component refers to a component that accounts for 50% by mass or more of the total mass of the recovered gas. Acetylene is an industrially important hydrocarbon.

The gas to be obtained may contain water vapor, hydrogen, nitrogen, and oxygen as impurities, in addition to the hydrocarbon. The amount of impurities is preferably 10% by mass or less, and more preferably 1% by mass or less of the recovered gas. The amount of impurities may be 0.0001% by mass or more, or 0.001% by mass or more of the recovered gas. In an aspect, the amount of impurities is 0.0001% by mass or more and 1% by mass or less of the recovered gas.

The gas to be obtained may contain at least one selected from the group consisting of, for example, acetylene, ethylene, ethane, methane, and hydrogen.

The presence confirmation and the quantitative determination of the hydrocarbon and impurities can be carried out by, for example, gas chromatograph mass spectrometry (GC-MS analysis), Fourier transform infrared spectroscopy (FT-IR analysis) with gas cells, or ultraviolet-visible absorption spectroscopy (UV-Vis analysis) of the recovered gas.

The amount of water to be brought into contact with the composition is appropriately set depending on the mass of the composition. The above amount of water is, for example, more than the amount required for the hydrolysis of the metal carbide and metal contained in the composition. In addition, an amount of water that enables the entire composition to be immersed and takes the evaporation due to the heat generated upon hydrolysis into consideration is desirably used.

According to the present disclosure, the faradaic efficiency e with respect to the production of hydrocarbon is improved. The current efficiency e is, for example, 8% or more, and may be 10% or more.

The current efficiency e with respect to $C_2H_2$ production can be calculated as follows.

First, the volume proportion of $C_2H_2$ contained in the recovered gas is calculated based on the total area of the peaks and the calibration curve obtained by GC-MS analysis. Then, the volume of $C_2H_2$ produced is calculated based on the volume occupied by the gas phase in the recovery container and the volume proportion of $C_2H_2$ in the calculated gas.

Finally, the faradaic efficiency e (%) is calculated by the following expression assuming that the $C_2H_2$ produced was in standard conditions (0°C, 101 kPa).

[Expression 1]

$$e\ [\%] = \frac{\text{Actually measured amount of C2H2 produced [mol]}}{\text{Theoretical amount of C2H2 produced, determined from electrical quantity [mol]}} \times 100$$

$$= \frac{\dfrac{\text{Calculated volume of C2H2 produced [L]}}{\text{Volume of C2H2 in standard state (22.4) [L/mol]}}}{\dfrac{\text{Average current value during electrolysis [A]} \times \text{electrolysis time [s]}}{\text{Faraday constant (96485) [C/mol]} \times \text{Number of electrons in C2H2 (10) [-]}}} \times 100$$

The hydrolysis of the first metal carbide produces the hydroxide of the first metal together with the hydrocarbon. For example, the hydrolysis of calcium carbide produces calcium hydroxide together with water.

$$CaC_2 + 2H_2O \rightarrow C_2H_2 + Ca(OH)_2$$

Second embodiment

The present embodiment is different from the first embodiment in terms of the method for recovering the $CO_3^{2-}$ concentration. The difference will be described below. In the present embodiment, the method for producing a metal carbide and other constitution are the same as those of the first embodiment, and thus, the description thereof is omitted. In the present embodiment, the method for producing a hydrocarbon is the same as that of the first embodiment, and thus, the description thereof is omitted.

In the present embodiment, the recovery of the carbonate ion concentration is conducted by supplying a current between the working electrode and the counter electrode at a current density (second current density) lower than the current density (first current density) supplied during the production of the carbide of the first metal. Consequently, the reduction reaction of $CO_3^{2-}$ is suppressed, and as a result, the current efficiency is improved.

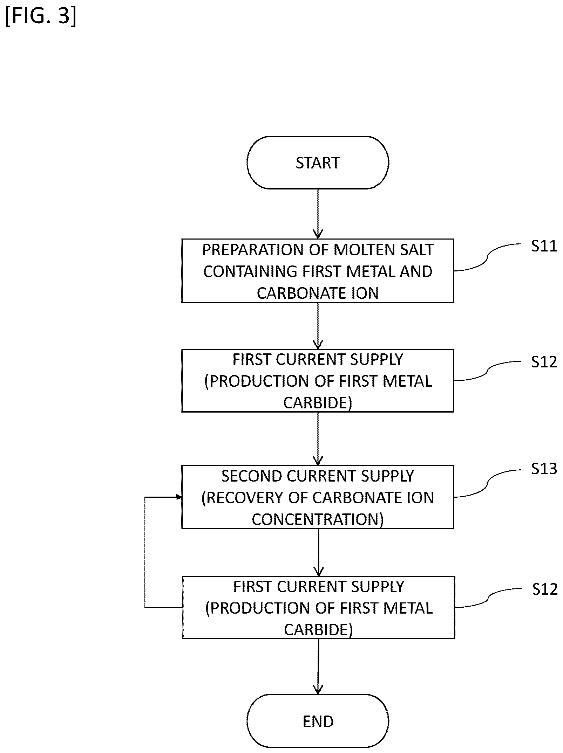

FIG. 3 is a flow chart of the method for producing a metal carbide according to the present embodiment.

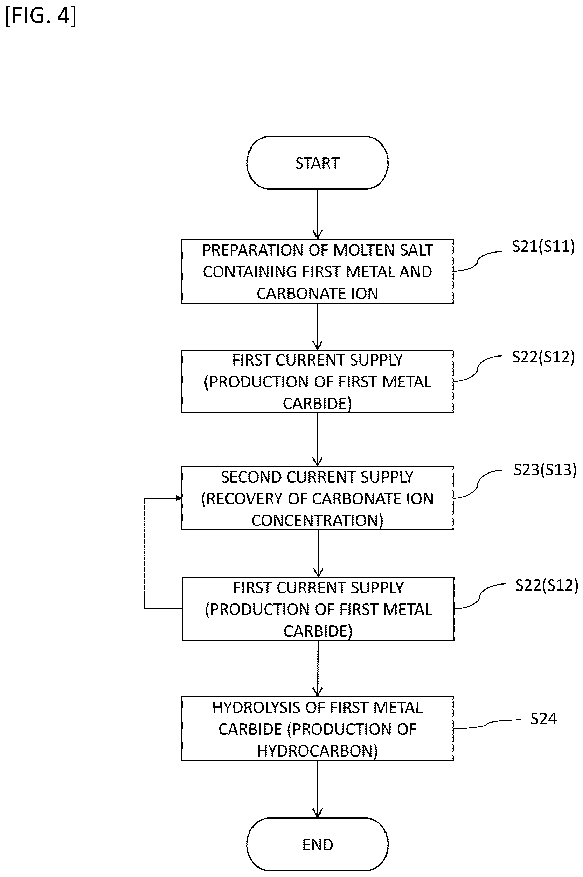

FIG. 4 is a flow chart of the method for producing a hydrocarbon according to the present embodiment.

The second current density is only required to be lower than the first current density supplied immediately before.

The ratio of the first current density to the second current density (first/second) is not limited, and the consumption of $CO_3^{2-}$ near the working electrode is only required to be sufficiently suppressed in the second current density. From the viewpoint of the current efficiency, the ratio of the current density (first/second) may be 2 or more. The ratio of the current density (first/second) may be 5 or more, 6.5 or more, and 10 or more.

The current supply time of the first current density (first supply time) is not limited. From the viewpoint of the current efficiency, the first supply time may be 10 seconds or more and 1,000 seconds or less. The first supply time may be 250 seconds or more, and 500 seconds or more. The first supply time may be 1,000 seconds or less, and 800 seconds or less.

The current supply time of the second current density (second supply time) is not limited. The second supply time may be shorter than the first supply time. From the viewpoint of the current efficiency, the second supply time may be 10 seconds or more and 1,000 seconds or less. The second supply time may be 1 second or more, 3 seconds or more, and 30 seconds or more. The second supply time may be 50 seconds or less, and 300 seconds or less.

The current supply at the first current density (first current supply) and the current supply at the second current density (second current supply) are alternately repeated one or more times. The term alternately repeated one or more times means that, when the second current supply and the first current supply after the first current supply are defined as one cycle, this cycle is carried out one or more times.

The second current supply is carried out between the first current supply and the first current supply. The second supply time refers to the time between the first current supply and the first current supply, and is the time during which a current of the second current density is supplied.

The first current supply and the second current supply may be alternately repeated two or more times (first supply → second supply → first supply → second supply → first supply), three or more times (first supply → second supply → first supply → second supply → first supply → second supply → first supply), or four or more times (first supply → second supply → first supply → second supply → first supply → second supply → first supply → second supply → first supply).

The first current density supplied at the first time and the first current density supplied at the second time or later may be the same or different. The first current densities supplied at the second time and later may be the same or different from one another.

The first supply time at the first time and the first supply time at the second time or later may be the same or different. The first supply times at the second time and later may be the same or different from one another.

The second current densities supplied a plurality of times may be the same or different from one another. The second supply times of a plurality of times may be the same or different from one another.

In one aspect of the second embodiment, the method for producing a metal carbide is a method for producing a metal carbide using a carbonate ion as a carbon source, the method comprising:

> preparing a molten salt containing one selected from the group consisting of a lithium ion, a sodium ion, a potassium ion, a rubidium ion, and a cesium ion and one selected from the group consisting of a calcium ion and a magnesium ion, as first metal ions, and a carbonate ion;
> arranging a working electrode and a counter electrode in the molten salt, and supplying a current between the working electrode and the counter electrode at a current density of 200 mA/cm$^{-2}$ for 500 seconds to produce a carbide of a first metal; and
> supplying a current between the working electrode and the counter electrode at a current density of 30 mA/cm$^{-2}$ for 30 seconds to supply the current, wherein
> the current supply and the current supply interruption are alternately repeated two times under the same conditions.

Hereinabove, the embodiments of the present disclosure have been described in detail, but the present disclosure is not limited to these, and its design can be modified within a range not departing from the gist of the present disclosure.

In the above embodiments, carbon dioxide is used as the carbonate ion source, but the carbonate ion source is not limited thereto. The carbonate ion source may be a carbonate of an arbitrary metal. When the carbonate of the first metal is used, the first metal ion and carbonate ions are generated by ionization. The carbonate of the first metal can be synthesized by, for example, reacting the hydroxide of the first metal with carbon dioxide.

EXAMPLES

[Example 1]

(Production of metal carbide)

NaCl, KCl, and CaCl$_2$ were mixed so that NaCl/KCl/CaCl$_2$ was 33.4 mol%/11.6 mol%/55.0 mol%, then 3 mol% of CaO was further mixed, and the mixture was dried in vacuum at 200°C and 100 Pa or less for 24 hours or more. This mixed salt was put in a container made of glass, set in an electric furnace, and heated to 550°C. Thus, a molten salt of NaCl-KCl-CaCl$_2$-CaO was obtained.

Then, a working electrode (1 cm × 1.5 cm, Fe plate), a counter electrode (a coil-shaped platinum wire), and a reference electrode (Ag$^+$/Ag) were attached to the lid of the above container, and the container was sealed with this lid. The molten salt in the container was heated to 550°C, and CO$_2$ was blown thereinto at a flow rate of 100 mL/min for 30 min or more.

A current was supplied for 500 seconds while maintaining the current density at 200 mA/cm$^{-2}$ using a potentio-galvanostat. Thereafter, the current supply was interrupted for 300 seconds. Subsequently, a current was supplied for 500 seconds while maintaining the current density at 200 mA/cm$^{-2}$ again.

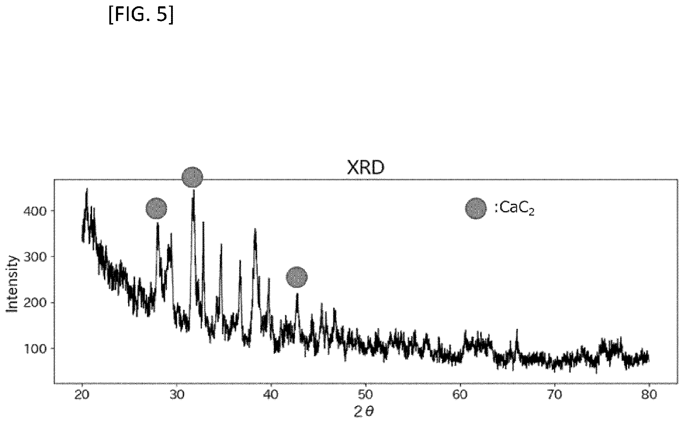

Thereafter, the working electrode was taken out, and a precipitate was confirmed to be precipitated on the working electrode. The precipitate was confirmed to contain CaC$_2$ as the main component by the X-Ray diffraction measurement. FIG. 5 is a graph showing the results of the analysis by X-Ray diffraction of the precipitate. To avoid the contact with the moisture in the atmosphere, the analysis was carried out by fixing the precipitate on an airtight sample holder in a glove box and using a CuKα ray.

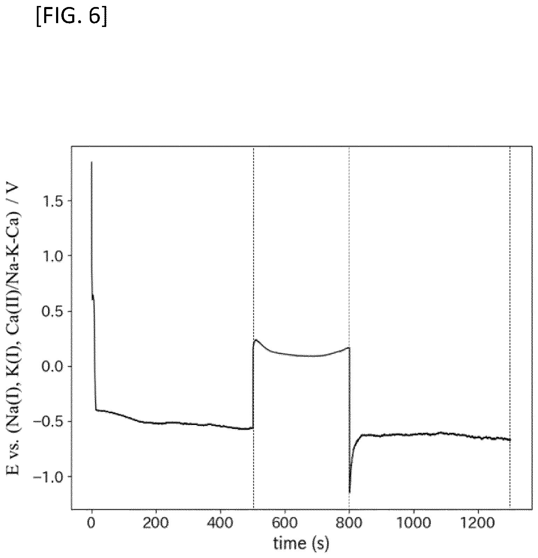

All the experimental operations were carried out in a glove box in which a high purity argon atmosphere was maintained. FIG. 6 is a graph showing a change over time of the working electrode potential upon energization in the production of the metal carbide. The potential of the working electrode is a value obtained by measuring the potential between the reference electrode (Ag$^+$/Ag) and the cathode and calibrating the measured value based on the Na-K-Ca alloy precipitation potential.

(Preparation of hydrocarbon)

The precipitate was put in a sealed test tube. Pure water was added to the test tube in small portions at ambient temperature (23°C), and the precipitate was hydrolyzed. The total amount of the water added was 2.5 ml. After bubbling was confirmed to be generated in the test tube, the test tube was allowed to stand until no bubbling was observed. Subsequently, 100 $\mu$l (microliter) of the gas in the test tube was collected using a gas tight syringe.

The obtained gas was subjected to GC-MS analysis using a gas chromatograph (GC) apparatus, and the production of $C_2H_2$ as the main component was confirmed. Further, methane, ethane and hydrogen were confirmed to be produced as byproducts. In addition, water, carbon dioxide, nitrogen, oxygen, and argon were contained. The amount of each component produced was also confirmed. The mass proportion of $C_2H_2$ in the recovered gas was sufficiently larger than 50% by mass.

With respect to $C_2H_2$ gas production, the current efficiency was calculated to be about 14.12%. It can be said that the higher the current efficiency with respect to $C_2H_2$ gas production is, the higher the current efficiency with respect to metal carbide production is.

[Examples 2 to 8]

The electrolysis and hydrolysis were carried out in the same manner as in Example 1, except that the current supply time and interruption time were changed as shown in Table 1.

[Comparative Examples 1 to 3]

The electrolysis and hydrolysis were carried out in the same manner as in Example 1, except that no interruption time of the current was provided and the electrolysis was continuously carried out for 1,000 seconds, 600 seconds, or 250 seconds.

With respect to $C_2H_2$ gas production of Comparative Example 1, the current efficiency was 7.55%. In comparison of Example 1 with Comparative Example 1, the current efficiency when the current supply was interrupted was 1.8 times higher than that when continuous electrolysis was carried out. Also, in comparison of Examples 3 to 8 with Comparative Example 1, the current efficiency when $CO_3^{2-}$ was recovered was 1.3 to 2.6 times higher. Also, in comparison of Example 2 and Comparative Example 2, the current efficiency was 1.1 times higher. The current efficiency of Comparative Example 3 was significantly low.

[Table 1]

| Molten salt: NaCl-KCl-CaCh-Cao | | | | | | | | | |
|---|---|---|---|---|---|---|---|---|---|
| Example | First current supply | | Interruption | Second current supply | | Amount of energization /C | Current efficiency /% | Repetition frequency /mHz | Duty ratio |
| | Current density /mAcm$^{-2}$ | Supply time /sec | Interruption time /sec | Current density /mAcm$^{-2}$ | Supply time /sec | | | | |
| 1 | 200 | 500 | 300 | 200 | 500 | 400 | 14.12 | 1.25 | 0.625 |
| 2 | 200 | 300 | 300 | 200 | 300 | 240 | 8.13 | 1.67 | 0.500 |
| 3 | 200 | 500 | 50 | 200 | 500 | 400 | 10.22 | 1.82 | 0.909 |
| 4 | 200 | 500 | 30 | 200 | 500 | 400 | 19.82 | 1.89 | 0.943 |
| 5 | 200 | 500 | 10 | 200 | 500 | 400 | 18.18 | 1.96 | 0.980 |
| 6 | 200 | 500 | 5 | 200 | 500 | 400 | 13.85 | 1.98 | 0.990 |
| 7 | 200 | 500 | 3 | 200 | 500 | 400 | 11.08 | 1.99 | 0.994 |
| 8 | 200 | 500 | 1 | 200 | 500 | 400 | 15.82 | 2.00 | 0.998 |
| Comparative Example | | | | | | | | | |
| 1 | 200 | 1000 | - | - | - | 400 | 7.55 | 0 | 1 |
| 2 | 200 | 600 | - | - | - | 240 | 7.37 | 0 | 1 |
| 3 | 200 | 250 | - | - | - | 100 | 0.43 | 0 | 1 |

EP 4 663 812 A1

[Example 9]

The electrolysis and hydrolysis were carried out in the same manner as in Example 1, except that the current supply time and interruption time were respectively changed to 250 seconds and 30 seconds, and this operation was repeated four times.

With respect to $C_2H_2$ gas production, the current efficiency was 13.41%. In comparison of Example 9 with Comparative Example 1, the current efficiency when the current supply was interrupted was 1.7 times higher. It can be understood from Example 9 that the current efficiency is also improved by alternately repeating the current supply and interruption.

[Table 2]

| Molten salt: NaCl-KCl-$CaCl_2$-CaO | | | | | | | | | | | | | | | |
|---|---|---|---|---|---|---|---|---|---|---|---|---|---|---|---|
| Example | First current supply | | Interruption | Second current supply | | Interruption | Third current supply | | Interruption | Fourth current supply | | Amount of energization /C | Current efficiency /% | Repetition frequency /mHz | Duty ratio |
| | Current density /mAcm$^{-2}$ | Supply time /sec | Interruption time /sec | Current density /mAcm$^{-2}$ | Supply time /sec | Interruption time /sec | Current density /mAcm$^{-2}$ | Supply time /sec | Interruption time /sec | Current density /mAcm$^{-2}$ | supply time /sec | | | | |
| 9 | 200 | 250 | 30 | 200 | 250 | 30 | 200 | 250 | 30 | 200 | 250 | 400 | 13.41 | 3.57 | 0.893 |

[Example 10]

The electrolysis and hydrolysis were carried out in the same manner as in Example 4, except that a current of a current density of 30 mA/cm$^{-2}$ was supplied instead of the current supply interruption.

With respect to $C_2H_2$ gas production, the current efficiency was 8.49%. In comparison of Example 10 with Comparative Example 1, the current efficiency when the current was supplied at a low current density was 1.1 times higher than that when the current was supplied at the same current density. In addition, the improvement in the current efficiency can be expected by repeating the current supply at a lower current density and the current supply at a higher current density.

[Table 3]

| Molten salt: NaCl-KCl-CaCl$_2$-CaO | | | | | | | | | | |
|---|---|---|---|---|---|---|---|---|---|---|
| Example | First current supply | | Second current supply | | First current supply | | Amount of energization /C | Current efficiency /% | Repetition frequency /mHz | Duty ratio |
| | Current density /mAcm$^{-2}$ | Supply time /sec | Current density /mAcm$^{-2}$ | Supply time /sec | Current density /mAcm$^{-2}$ | Supply time /sec | | | | |
| 10 | 200 | 500 | 30 | 30 | 200 | 500 | 400 | 8.49 | 1.89 | 0.943 |

EP 4 663 812 A1

INDUSTRIAL APPLICABILITY

The production method of the present disclosure is useful in various fields because it enables the reaction to rapidly proceed at a relatively low temperature.

The present application claims priority based on JP 2024-041238 filed on March 15, 2024, and the entire content of which is incorporated herein by reference.

**Claims**

1.   A method for producing a metal carbide using a carbonate ion as a carbon source, the method comprising:

preparing a molten salt containing a first metal ion and the carbonate ion;
arranging a working electrode and a counter electrode in the molten salt, and supplying a current between the working electrode and the counter electrode at a predetermined current density to produce a carbide of the first metal; and
recovering a carbonate ion concentration near the working electrode, wherein
the production of the carbide of the first metal and the recovery of the carbonate ion concentration are alternatively repeated one or more times.

2.   The method for producing a metal carbide according to claim 1, wherein the recovery of the carbonate ion concentration is conducted by interrupting the current supply between the working electrode and the counter electrode.

3.   The method for producing a metal carbide according to claim 2, wherein the current supply is interrupted for 1 second or more and 1,000 seconds or less in the recovery of the carbonate ion concentration.

4.   The method for producing a metal carbide according to claim 2 or 3, wherein the current is supplied for 10 seconds or more and 1,000 seconds or less in the production of the carbide of the first metal.

5.   The method for producing a metal carbide according to claim 1, wherein the recovery of the carbonate ion concentration is conducted by supplying a current between the working electrode and the counter electrode at a current density lower than the current density supplied during the production of the carbide of the first metal.

6.   The method for producing a metal carbide according to any one of claims 1 to 5, wherein the molten salt contains at least one selected from the group consisting of an alkali metal ion and an alkali earth metal ion as the first metal ion.

7.   The method for producing a metal carbide according to any one of claims 1 to 6, wherein the molten salt contains one selected from the group consisting of a lithium ion, a sodium ion, a potassium ion, a rubidium ion, and a cesium ion, and one selected from the group consisting of a calcium ion and a magnesium ion, as the first metal ion.

8.   The method for producing a metal carbide according to any one of claims 1 to 7, wherein the molten salt further contains at least one selected from the group consisting of a halide ion and an oxide ion, as an anion.

9.   The method for producing a metal carbide according to any one of claims 1 to 8, wherein the molten salt further contains both a halide ion and an oxide ion, as the anion.

10.  The method for producing a metal carbide according to any one of claims 1 to 9, wherein the metal carbide composition further contains at least one selected from the group consisting of carbon, and a simple substance, a halide, a carbonate, an oxide, a hydride, and a peroxide of the first metal.

11.  A method for producing a hydrocarbon comprising:

preparing a molten salt containing a first metal ion and a carbonate ion;
arranging a working electrode and a counter electrode in the molten salt, and supplying a current between the working electrode and the counter electrode at a predetermined current density to produce a carbide of a first metal;
recovering a carbonate ion concentration near the working electrode; and

hydrolyzing the carbide of the first metal to obtain gas containing a hydrocarbon, wherein
the production of the carbide of the first metal and the recovery of the carbonate ion concentration are alternatively repeated one or more times.

12. The method for producing a hydrocarbon according to claim 11, wherein the gas contains acetylene.

13. The method for producing a hydrocarbon according to claim 11 or 12, wherein the gas contains acetylene and at least one selected from the group consisting of ethylene, ethane, methane, methylacetylene, propylene, butene, and hydrogen.

[FIG. 1]

START

PREPARATION OF MOLTEN SALT
CONTAINING FIRST METAL AND
CARBONATE ION — S11

CURRENT SUPPLY (PRODUCTION
OF FIRST METAL CARBIDE) — S12

INTERRUPTION OF CURRENT SUPPLY
(RECOVERY OF CARBONATE ION
CONCENTRATION) — S13

CURRENT SUPPLY (PRODUCTION
OF FIRST METAL CARBIDE — S12

END

[FIG. 2]

```
                    START

         PREPARATION OF MOLTEN SALT
         CONTAINING FIRST METAL AND      ── S21(S11)
               CARBONATE ION

         CURRENT SUPPLY (PRODUCTION      ── S22(S12)
            OF FIRST METAL CARBIDE)

         INTERRUPTION OF CURRENT SUPPLY  ── S23(S13)
         (RECOVERY OF CARBONATE ION
                CONCENTRATION)

         CURRENT SUPPLY (PRODUCTION      ── S22(S12)
            OF FIRST METAL CARBIDE)

         HYDROLYSIS OF FIRST METAL
         CARBIDE (PRODUCTION OF          ── S24
              HYDROCARBON)

                     END
```

[FIG. 3]

```
                    ┌─────────────┐
                    │    START    │
                    └──────┬──────┘
                           │
                           ▼
          ┌────────────────────────────────┐
          │   PREPARATION OF MOLTEN SALT    │ ⟋ S11
          │  CONTAINING FIRST METAL AND     │
          │        CARBONATE ION            │
          └────────────────┬───────────────┘
                           │
                           ▼
          ┌────────────────────────────────┐
          │       FIRST CURRENT SUPPLY      │ ⟋ S12
          │   (PRODUCTION OF FIRST METAL    │
          │            CARBIDE)             │
          └────────────────┬───────────────┘
                           │
                           ▼
          ┌────────────────────────────────┐
    ┌────▶│     SECOND CURRENT SUPPLY       │ ⟋ S13
    │     │   (RECOVERY OF CARBONATE ION    │
    │     │         CONCENTRATION)          │
    │     └────────────────┬───────────────┘
    │                      │
    │                      ▼
    │     ┌────────────────────────────────┐
    │     │      FIRST CURRENT SUPPLY       │ ⟋ S12
    └─────│   (PRODUCTION OF FIRST METAL    │
          │            CARBIDE)             │
          └────────────────┬───────────────┘
                           │
                           ▼
                    ┌─────────────┐
                    │     END     │
                    └─────────────┘
```

[FIG. 4]

```
                    ┌─────────────┐
                    │    START    │
                    └──────┬──────┘
                           │
                           ▼
              ┌─────────────────────────┐
              │ PREPARATION OF MOLTEN SALT │──── S21(S11)
              │ CONTAINING FIRST METAL AND │
              │      CARBONATE ION        │
              └─────────────┬─────────────┘
                            │
                            ▼
              ┌─────────────────────────┐
              │   FIRST CURRENT SUPPLY    │──── S22(S12)
              │ (PRODUCTION OF FIRST METAL │
              │        CARBIDE)           │
              └─────────────┬─────────────┘
                            │
                            ▼
              ┌─────────────────────────┐
        ┌────▶│   SECOND CURRENT SUPPLY   │──── S23(S13)
        │     │ (RECOVERY OF CARBONATE ION │
        │     │     CONCENTRATION)        │
        │     └─────────────┬─────────────┘
        │                   │
        │                   ▼
        │     ┌─────────────────────────┐
        │     │   FIRST CURRENT SUPPLY    │──── S22(S12)
        └─────│ (PRODUCTION OF FIRST METAL │
              │        CARBIDE)           │
              └─────────────┬─────────────┘
                            │
                            ▼
              ┌─────────────────────────┐
              │ HYDROLYSIS OF FIRST METAL │──── S24
              │  CARBIDE (PRODUCTION OF   │
              │      HYDROCARBON)         │
              └─────────────┬─────────────┘
                            │
                            ▼
                    ┌─────────────┐
                    │     END     │
                    └─────────────┘
```

[FIG. 5]

[FIG. 6]

## INTERNATIONAL SEARCH REPORT

| International application No. |
| --- |
| **PCT/JP2025/009786** |

| A. | CLASSIFICATION OF SUBJECT MATTER |
| --- | --- |

*C25B 1/01*(2021.01)i; *C01B 32/935*(2017.01)i; *C01B 32/942*(2017.01)i; *C07C 5/00*(2006.01)i; *C07C 11/24*(2006.01)i; *C25B 9/00*(2021.01)i; *C25B 15/00*(2006.01)i; *C25B 15/02*(2021.01)i; *C25B 15/08*(2006.01)i
FI:   C25B1/01 Z; C07C11/24; C07C5/00; C25B9/00 Z; C25B15/02; C25B15/00 302A; C25B15/08 302; C01B32/942; C01B32/935

According to International Patent Classification (IPC) or to both national classification and IPC

| B. | FIELDS SEARCHED |
| --- | --- |

Minimum documentation searched (classification system followed by classification symbols)

C25B1/01; C01B32/935; C01B32/942; C07C5/00; C07C11/24; C25B9/00; C25B15/00; C25B15/02; C25B15/08

Documentation searched other than minimum documentation to the extent that such documents are included in the fields searched

Published examined utility model applications of Japan 1922-1996
Published unexamined utility model applications of Japan 1971-2025
Registered utility model specifications of Japan 1996-2025
Published registered utility model applications of Japan 1994-2025

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | JP 2023-54787 A (DOSHISHA) 14 April 2023 (2023-04-14) <br> claims, paragraphs [0029]-[0034], examples, fig. 1, 2 | 1-13 |
| Y | JP 2022-513860 A (OPUS 12 INC.) 09 February 2022 (2022-02-09) <br> claims 1-18, paragraphs [0004], [0054]-[0058], [0060]-[0081], [0293]-[0308] | 1-13 |
| Y | JP 4-311586 A (MITSUBISHI ELECTRIC CORPORATION) 04 November 1992 <br> (1992-11-04) <br> paragraph [0004] | 1-13 |
| A | JP 2013-256679 A (TOYOTA JIDOSHA KABUSHIKI KAISHA) 26 December 2013 <br> (2013-12-26) | 1-13 |
| A | JP 2004-225133 A (MITSUBISHI HEAVY INDUSTRIES, LTD.) 12 August 2004 <br> (2004-08-12) | 1-13 |

☐ Further documents are listed in the continuation of Box C.      ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **03 June 2025** | **17 June 2025** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (July 2022)

**INTERNATIONAL SEARCH REPORT**
Information on patent family members

International application No.

**PCT/JP2025/009786**

| Patent document cited in search report | | | Publication date (day/month/year) | Patent family member(s) | | | Publication date (day/month/year) |
|---|---|---|---|---|---|---|---|
| JP | 2023-54787 | A | 14 April 2023 | EP | 4394085 | A1 | |
| | | | | claims, paragraphs [0017]-[0022], example 5, fig. 1, 2 | | | |
| | | | | JP | 2023-57158 | A | |
| | | | | JP | 2024-169598 | A | |
| | | | | WO | 2023/058619 | A1 | |
| | | | | US | 2024/0286974 | A1 | |
| | | | | TW | 202330404 | A | |
| | | | | CN | 118056035 | A | |
| JP | 2022-513860 | A | 09 February 2022 | US | 2020/0220185 | A1 | |
| | | | | paragraphs [0004], [0054]-[0058], [0060]-[0078], examples, claims 1-11, 18 | | | |
| | | | | JP | 2024-167174 | A | |
| | | | | US | 2022/0393203 | A1 | |
| | | | | US | 2024/0145745 | A1 | |
| | | | | WO | 2020/132064 | A1 | |
| | | | | EP | 3899092 | A1 | |
| | | | | KR | 10-2021-0131999 | A | |
| | | | | CN | 113614287 | A | |
| | | | | CN | 119121255 | A | |
| JP | 4-311586 | A | 04 November 1992 | (Family: none) | | | |
| JP | 2013-256679 | A | 26 December 2013 | (Family: none) | | | |
| JP | 2004-225133 | A | 12 August 2004 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023054787 A
- JP 2023054788 A

- JP 2024041238 A

**Non-patent literature cited in the description**

- **CHONGRUI ZHUANG et al.** Deposition and Morphology Control of Carbon Film through Electrochemical Reduction of Carbonate Ions in Molten LiCl. *Journal of The Electrochemical Society*, October 2023, vol. 170 (10)